# EUROPEAN PATENT SPECIFICATION

(11) **EP 2 510 274 B1**
(45) Date of publication and mention of the grant of the patent: **18.09.2013**
(21) Application number: 10801447.3
(22) Date of filing: 07.12.2010
(51) Int. Cl.: F16L 55/175, F16L 3/10, F16L 23/024, F16L 25/12

(54) **PIPE CLAMP DEVICE**
ROHRSCHELLENTEIL
DISPOSITIF DE SERRAGE DE TUBE

(30) Priority: 07.12.2009 GB 0921394; 18.05.2010 GB 201008265
(43) Date of publication of application: 17.10.2012
(73) Proprietor: Subsea 7 Limited, Aberdeen, Aberdeenshire AB32 6FE (GB)
(72) Inventor: VU, Dan, Loughborough Leicestershire LE12 5JB (GB)
(74) Representative: Lawrence, Richard Anthony
(86) International application number: PCT/GB2010/052042
(87) International publication number: WO 2011/070354

(56) References cited:
- GB-A- 2 080 476
- US-A- 3 770 301
- US-A- 5 722 463
- US-A1- 2006 065 320
- US-A1- 2007 107 791

## Description

The present invention relates to a pipe clamp device for clamping around a pipe.

Embodiments of the invention can be used as pipe repair devices, to clamp around pipe defects such as dents, internal and external corrosion spots, cracks, gouges and defects occurring during pipeline construction. Embodiments of the invention can also be used as a coupling for connecting pipes together without performing any remedial work thereon.

Pipe defects generally fall into the following different categories.

### 1. Corrosion

Metal loss in the pipe usually occurs due to corrosion or gouging. Corrosion is wastage or thinning of the pipe wall due to a chemical (e.g. microbiological induced corrosion or galvanic attack (i.e. electrochemical action), and is typically time dependent. Galvanic corrosion typically results in large areas of general corrosion, local pitting, or selective corrosion of welds. Microbiological induced corrosion typically has a rougher surface with axially orientated ridges. Common forms of corrosion include external, internal, pitting (internal or external), selective seam corrosion, and stress corrosion cracking. Corrosion can occur on the internal or the external surface of the pipe wall depending on the local environment and the product conveyed in the pipe. Internal and external corrosion are generally caused by different mechanisms and so have different morphologies. The conveying of liquids in the pipe can also lead to internal erosion of the pipe wall, and this is more difficult to quantify than external effects. Regardless of the actual corrosion mechanism, the result is metal loss of the pipe wall thickness.

### 2. Gouging

A gouge in a pipe is a part-wall metal loss defect, caused by contact with an object that results in material being gouged out of the wall of the pipe, most commonly when objects (anchors, trawl boards, etc.) strike an offshore pipeline. An important factor when considering repairing any external interference defect such as a gouge in an offshore pipe is the possibility of collapse due to external pressure. The material adjacent to the gouge is typically cold worked, potentially reducing the local ductility and toughness, making it susceptible to secondary cracking which can easily extend through the cold worked layer. The cracking at the base of a gouge can be caused by pipe spring-back after the external interference, or due to the severe material deformation that can occur during the gouging process.

### 3. Dents and Buckles

Dents are depressions in the pipe surface, and buckles are a partial collapse of the pipe due to excessive bending or compressive axial loadings. A dent is a permanent plastic deformation of the circular cross section of the pipe. The material within and adjacent to the dent has typically been extensively cold worked (i.e. work hardened, resulting in an elevation of the tensile properties and a reduction in the ductility). Dents in offshore pipes can be caused by rocks on the seabed, anchors, chains, trawl boards and dropped objects. Dents can occur in concert with other damage such as gouging.

### 4. Cracks

Cracks in a pipe usually occur due to fatigue, stress corrosion, weld defects or third party damage. Selective weld corrosion is often considered to be a similar defect to a crack because it leads to a wedge-shaped groove that behaves similarly to a crack. Cracking can be environmentally stimulated through the combination of stress and electrochemical environments to give rise to such phenomena as stress corrosion cracking, and hydrogen stress cracking. Weld area cracks can form in the weld deposit, the fusion line or the HAZ (heat-affected zone).

### 5. Metallurgical Anomalies

Metallurgical anomalies include hard spots, laminations, slivers, scabs and inclusions. Hard spots result from uneven cooling or quenching during manufacture, and are typically local regions that have a considerably higher hardness than the bulk hardness of a pipe. These areas are susceptible to cracking in the presence of atomic hydrogen.

Laminations are internal metal separations that are generally parallel to the surface of a pipe. Blisters are raised spots on the surface of a pipe caused by expansion of gas in a cavity within the pipe wall. Slivers, scabs and rolled-in slugs are typically foreign metallic particles that have been rolled into the surface, and are usually not fused. Scabs are usually due to casting defects while slivers-are typically introduce during rolling. Inclusions are foreign or non-metallic particles that are trapped during steel solidification.

All of the above defects can lead to pipe failure or other deterioration of performance, and require remedial action.

According to the present invention, there is provided a pipe clamp device comprising first and second portions connected together at a hinge, at least one portion being adapted to move pivotally around the hinge relative to the other, the first and second portions being adapted to co-operate with one another to close around and at least partially encircle a pipe to be clamped, the pipe clamp device having securing members to secure the first and second portions in a clamped arrangement around the pipe; the pipe clamp device having a sealing mechanism configured to seal between one of the first and second portions and the pipe, wherein the sealing mechanism comprises first and second seal devices housed in respective recesses, and defining a sealed chamber between the recessed first and second seal devices, and wherein the pipe clamp device (1) is adapted for a settable fluid to be injected between the first and second seal devices and the pipe, wherein at least one of the first and second seal devices has first and second seal bodies (36) spaced axially away from one another to define a low volume chamber therebetween.

US 2006/0065320 shows a similar pipe clamp device and method of repairing a pipe lacking the low volume chamber.

Typically, the apparatus includes alternate first and second seal devices, which are adapted to be received in the recesses, and are adapted to seal off the annular chamber. Typically, the alternate and the original seal devices are different designs of seals adapted to seal at different pressures, and can be swapped out of the recess as required.

In one embodiment, the first and second seal devices are located at opposite ends of the portions with an annular chamber between them.

In some embodiments, the annular chamber is wide. In other embodiments, the first and second seal devices are located close together, and the annular chamber has a small axial dimension parallel to the axis of the pipe.

Typically, the fluid injected into the chamber is adapted to change phase from a fluid to a solid phase after injection into the chamber. The change in the phase of the injected fluid in the chamber typically supports the seals defining the boundaries of the chamber against the formation as a result of high pressure differentials applied across the seals.

Typically, each seal device has first and second seal bodies, which are typically spaced axially away from one another by a short distance to define a low volume chamber therebetween, and are typically annular, typically extending around the inner surface of the first and second portions of the clamp device. Typically, the chamber defined between the first and second bodies is also annular, extending circumferentially around the inner face of the first and second bodies. Typically, the first and second seal bodies and the chamber on each of the first and second portions of the device are axially aligned with one another at each end of the clamp device, so that when the clamp device is clamped in place over a pipe, the first and second seal bodies on the first portion engage and in act concert with the first and second seal bodies on the second portion in order to provide a continuous first and second seal of the annulus between the clamp and the pipe, with a continuous chamber therebetween. Therefore, the chamber typically has only one (or optionally two) injection points opening into the annular chamber between the first and second seal bodies, through which the settable fluid can be injected from outside the clamp device.

Typically, the first and second seal bodies are separate high-pressure end seals, which are typically arranged in back to back relationship to one another. Therefore, the configuration of the first and second seal bodies can typically be similar, but arranged in mirror image in relation to one another.

Optionally, the opposing faces of the seal bodies that define the chamber typically have an arcuate surface, with radially inner and outer lips.

Typically, the first and second seal bodies can be resilient, so that e.g. the arcuate inner and outer lips or other parts of the seal bodies can deform in response to pressure differentials applied across the first and second seal bodies. Deformation of the inner and outer lips of the first and second seal bodies (e.g. by injection of the settable fluid under pressure into the chamber) typically enhances the seal by deforming the seal lips to press radially outward against the clamp and the pipe, and the lips contain the settable fluid within the annular chamber between the first and second seal bodies.

The first and second seal bodies are typically housed within an annular recess, which is typically on the inner face of the first and second portions, but could also or alternatively be in the outer face of the pipe. The annular recess is typically located adjacent to one end of the inner surface of the first and second portions, and typically is provided at or adjacent to each end of the first and second portions.

The first and second seal bodies in each seal device are typically spaced apart from one another by a spacer, which is maintained within the annular chamber.

Optionally, the first and second seal bodies have a waffle profile in direct contact with pipe surface. The waffle profile typically has a lattice arrangement of ribs, which are axially and radially spaced from one another. The ribs are typically spaced approximately 2mm from one another in a radial direction, 5mm in an axial direction, and are about 1 mm deep. This arrangement typically forms small individual pressure containment zones. The function of these zones is to improve local containment of pressure and to restrict it from traversing the sealing area via imperfections on the pipeline surface such scoring or poor local surface finish. The contact area of the ribs is relatively small, and the seal material is typically resilient and able to deform onto the pipe surface locally.

Optionally, the recess housing the first and second seal bodies is adapted to receive a low-pressure seal in place of the first and second seal bodies. A suitable low-pressure seal can typically be an O-ring seal, typically with a seal support or similar, or can be a resilient packer strip extending circumferentially around the recess. Typically, the low pressure and high pressure sealing devices are of a similar size and shape to one another and can fit within the recess and operate therein without modification of the recess.

In certain embodiments of the invention, the high pressure seal can be swapped out for a low pressure variant (or vice versa) in order to fit the circumstances of the repair to which the pipe clamp is being applied.

In certain embodiments of the invention, the injection conduit for injection of the settable material into the annular chamber can be used before or after injection of the settable material for pressure testing to check the integrity of the seal during or after installation, and before injection of the settable material.

Typically, the first and second seal bodies extend radially beyond the nominal diameter of the inner face of the first and second portions, so that they stand proud of the surface and are compressed between the clamp and the pipe when the fixing devices are actuated to connect the clamp device to the pipe. Typically, the seal devices are highly compressible and can seal a broad range of radial dimensions of annulus.

In most cases, non-leaking defects (such as corrosion, dents and cracks) can reduce the pipeline's ability to resist the primary internal pressure within the pipe (i.e. hoops stress). In such cases, settable material such as grout can be injected into the annulus between the outer surface of the pipe and the inner surface of the clamp device that is located over the defective pipeline section, e.g. between the seal devices at each end. After setting, the grout or other settable material therefore typically acts to transfer radial loads from the defective section of the pipeline onto the radially outer clamp body, which can optionally be reinforced in order to withstand the hoop stress applied by the internal pipeline pressure. The clamp can then provide the overall structural strength, but full containment of internal pipeline pressure by the clamp is not typically necessary, as the fluid is typically not leaking from the pipe in such defects. For most defects of this nature, a grout-filled clamp device according to the invention can be considered as a permanent solution to the defect, as it can effectively prevent further growth in defect sizes, and can restore full integrity of the pipeline.

The end seal devices assembled in the clamp device in such embodiments can typically be low-pressure seals, which simply act to contain the grout inside the annulus between the clamp device and the pipe during the injection process while the grout is still in a liquid phase. When the grout has set to a solid phase, then the end seals are no longer necessary in this embodiment, and so simple O-ring seals or resilient packer strip devices can be employed in such embodiments.

Some other pipe defects have through wall defects resulting in leaking of fluid through the pipe wall. Some non-leaking defects often have the potential to turn into leaking defects, where for example a gouge suffers corrosion or cracking, causing loss of pipe wall integrity at the defective sections. This means that fluid contained within the pipeline is able to leak to the outer surface of the pipe. Internal corrosion defects can fall into this category where corrosion may continue to grow and may eventually break through the pipe wall.

Certain embodiments of the invention can be adapted to treat leaking defects on a pipe. Typically, the same body of clamp device is employed but the end seals used are typically high-pressure end seals to contain the fluid leaking through the defect at the operating temperature and pressure of the pipeline. Typically, the end seal materials are selected to be compatible with the contained fluids.

In certain embodiments of the invention, the clamp device can be provided with a flange at one end (and optionally at each end). In typical embodiments according to this variation, a single end of the clamp device has a flange in the assembled clamp device, so that each portion of the clamp device that clamps around the pipe can typically terminate at a flanged portion forming typically a half of a complete circumferential flange that surrounds the pipe. Typically, embodiments according to this variation are used in pairs, and allow inter-connection of the flanges of respective clamp devices in each pair (directly or through a spool piece).

The un-flanged end of each clamp device can typically be grouted onto a pipe in the manner described above. This effectively helps to resist stresses on the pipe caused by seabed movements and internal pressure inducing hoop axial bending and torsion stresses on the pipe and the clamp's flange connectors. Typically, the flanged variant can be used with low-pressure seals sufficient to contain the grout in its liquid phase before setting, and does not need to be provided with high-pressure seals adapted to contain the pipeline fluids at operating pressures and temperatures, although the flanged variant can be used with high performance seals if desired.

Typically, the seal devices are spaced apart on the axis of the clamp device to an extent that the axial length of the pipe clamps between the seals permit an annular area for containment of grout that is at least three times the diameter of the main carrier pipe.

Optionally, a single pipe clamp embodiment can carry both high pressure and low-pressure seals, typically at opposite ends. Typically, high-pressure seals are provided on such embodiments adjacent to a flanged end. Typically, grout can be injected into the annular area between the end seals at each end in order to support the high-pressure seal, which can typically be exposed to pipeline pressure after the grout has set.

In certain embodiments of the invention, the clamp portions typically have an injection line for injection of settable material such as grout into the seal recesses at each end of at least one of the portions (typically between the seal inner and outer bodies). Optionally this-is separate from the injection line into the annulus between the seals, to permit injection of the grout (or other settable material) into the main annular space between the seals at each end. Typically, the injection lines are only provided in one of the clamp portions, as the annular areas are typically continuous around the circumference of the clamp device when the clamp device is made up on the pipe. However, injection lines can be provided in each clamp portion if desired.

In certain embodiments of the invention, the clamp device can be provided in more than two portions. For example, in some cases, the clamp can be provided in a semi-cylindrical top shell circumscribing 180 degrees of the pipe, and a two-part bottom shell, which can have two separate parts each hingedly connected to the top shell and each circumscribing 90 degrees of the pipe. The two parts of the bottom shell can close around the pipe to encircle it. Optionally the two parts of the bottom shell can be urged by double-acting hydraulic rams mounted between the top shell and each part of the bottom shell, which can drive the opening and closing of the bottom shell parts around the pipe.

Embodiments of the invention typically have high tolerance to pipeline ovality and irregular pipe surface shapes, as the annulus between the clamp device and the pipe can have a relatively large radial dimension, with sufficient clearance to accommodate extensive ovality of the pipe. The seal can typically be provided by the injected settable material, which can flow around the annulus (or the chamber) and seal it to contain the pressure, rather than relying on mechanical deformation of the seals alone to create the seal.

Certain embodiments of the invention can also withstand misalignment of pipe ends when the adjacent pipe clamps are connected to one another, as the large annulus can accommodate the misalignment, and the fluid seal and mechanical connection can be strengthened by the settable material rather than by preformed mechanical components.

Embodiments of the invention also permit pre-injection testing of the seals, to confirm integrity of the high-pressure seals before injection of the settable material. Pre-injection testing to check the integrity of the seal during installation can be facilitated by the provision of an annular space between the seal bodies, for example by an annular space created by the spacer located between the seal bodies. Settable material can then optionally be injected into the space to support the seal against extrusion or excessive deformation at high pressure. Test pressures can also be higher than the normal operating pressure of the pipeline.

Certain embodiments of the invention also permit a single clamp device to be used to treat a large number of different defects, ranging from non-leaking defects, which can be treated with the low pressure seals and the injection of grout between the seals, to leaking defects, which can use the high pressure seals in the same seal recess, and in which the grout can be injected between the seal bodies in each seal. Embodiments of the invention can also be used for connecting pipe spools which have been badly damaged and from which a section need to be cut and replaced. Generally, the repairs conducted by the use of embodiments of the invention can be carried out to a standard sufficient for the life of the pipeline.

Certain embodiments also permit hot tapping, as the clamp device can optionally incorporate an aperture in the body of one of the portions, and a T, Y, or K configured access sleeve into the annulus of the assembled clamp device, typically without the requirement of welding operations. Typically, access sleeves can be bounded by compression seals to withstand hydrostatic pressure at the depth of use, and the pipeline pressure and temperature conditions of the fluid within the pipe. Typically, the seals can be saddle seals, and can optionally have inner and outer seals with an annulus between them, which can optionally be grouted in the same way as the end seals to support the seal against high pressure. Optionally multiple access sleeves can be provided on a single clamp device.

Embodiments of the invention permit enhanced sealing and repair procedures without excessive mechanical stress or deformation being applied to the damaged pipeline by mechanical sealing arrangements, and with relatively few moving parts. Also, lighter weights of clamp device are possible, with advantages to installation and lifting and handing equipment and procedures.

In certain embodiments of the invention, the sealing mechanism can comprise more than two sealing devices. For example, the sealing mechanism may comprise three, four or more seal devices typically housed in respective recesses, and typically defining two or more sealed chambers (which can separate from one another) between the seal devices.

Optionally a settable fluid can be injected into the chamber between e.g. the first and second seal devices, and between the third and fourth seal devices, to create separate grouted areas, optionally with a non-grouted area between them.

Thus the annular chamber can optionally be divided into more than one area between adjacent seal devices, so that separate annular bands of grout can be formed in the annular areas, typically creating parallel rings of grouted seal that connects the clamp device to the pipe at spaced apart locations. The annular parallel rings of grout can typically be separated by one or more un-grouted annular areas. As in earlier embodiments, the seal devices can optionally be different designs of seals adapted to seal at different pressures, and can be swapped out of the recess as required.

The separate annular divisions of the chamber can be provided by forming additional recesses in the body of the pipe clamp device. In some embodiments, the same effect can be achieved simply by welding or otherwise connecting two pipe clamp device bodies as described above together end to end, each having first and second recessed seal devices. Typically one annular area, e.g. the central annular area between the second and the third seal devices can be left un-grouted, and can be used to straddle a leak in a pipeline or a junction between two adjacent pipe sections, or a pipe defect. Optionally the seals abutting the un-grouted area (e.g. between the second and third seal devices) can comprise high pressure seals to contain the pressure applied through the leak or junction, and the other outer seals (e.g. the first and fourth seal devices) can comprise lower pressure seals.

Therefore, in some embodiments the pipe clamp device can be used as a pipeline connector. The ends of first and second portions of pipe to be joined are typically brought together at a point between the seal devices of the pipe clamp device, for example, at or near a mid point of the jointed connector, typically between two high pressure seal devices in the pipe clamp device. Settable material such as grout is then typically injected into the annulus between the first and second seal devices and the first portion of pipe on one side of the joint. Settable material such as grout is typically also injected into the annulus between the third and fourth seal devices on the second portion of pipe on the other side of the joint. One advantage of the settable material being injected into the annulus in this way is that axial and other loads applied across the connection are transferred to and borne by the pipe clamp device rather than the junction between the ends of the pipe.

The two pipe clamp devices typically with interchangeable end seal arrangements can optionally be welded together before being transferred to the worksite. External loadings such as pipe and seabed movements and internal pressure typically induce hoop, axial, bending and torsion stresses on the pipe and the connection, and the settable material injected and set in the annular gaps between the pipe clamp device and the pipe portions can typically have excellent tensile, compressive and concentric shear strength to resist these forces and restrict their effects on the pipe portions and the connection between them.

The invention also provides a method of repairing a pipe defect, comprising applying a pipe clamp device to the defect, wherein the pipe clamp device comprises first and second portions, connected together at a hinge, wherein the method comprises closing the first and second portions around the defect to at least partially encircle the defect and securing them around the pipe to define an chamber between the first and second portions and the pipe; sealing the chamber using first and second seal devices, and injecting a settable fluid between the first and second seal devices and the pipe; wherein in sealing the chamber, at least one of the first and second seal devices has first and second seal bodies spaced axially away from one another to define a low volume chamber therebetween.

The invention also provides a method of connecting two ends of pipe, comprising applying the pipe clamp device around a pipe connection, wherein the pipe clamp device comprises first and second portions, connected together at a hinge, wherein the method comprises closing the first and second portions around the connection to at least partially encircle the connection and securing them around the pipe to define first and second annular areas between the first and second portions and the pipe; sealing the annular areas between the first and second portions and the pipe, and injecting a settable fluid into the annular areas.

In some embodiments a sealed annular area is provided on each pipe portion to be connected, and settable fluid is injected into each respective annular area. Typically the sealed annular areas on each pipe section are adjacent, and the adjacent sealing devices on the annular areas comprise high pressure seals.

Typically each annular area to be sealed has a respective fluid injection line. Typically high pressure seals can be as described for other embodiments, and can optionally have fluid injection lines for the seal recesses, for the injection of settable fluid as previously described into the seal recesses to support the seals.

Optionally the pipe clamp device can be applied to the pipes once the ends to be connected have been aligned. In some embodiments, the pipe clamp device can be applied to a first of the pipe portions to be connected, which can then be moved into position ready for connection to a second pipe portion, and the pipe clamp device can optionally be moved axially along the first pipe to straddle the connection between the two portions.

Optionally one or more pipe clamp device can be applied to a replacement pipe spool to be inserted into a pipeline from which a damaged section of pipe has been removed. Optionally the pipe clamp device can be applied to the pipe spool at the surface, or during manufacture, to reduce handing of the pipe clamp device at the worksite, and to permit delivery of the replacement spool and the pipe clamp device to the worksite as a single item. A pipe clamp device can typically be applied to each free end of the spool, and optionally can be axially slid over the end of the pipe so that it can be moved axially to straddle the junction between the replacement spool piece and the pipeline when the replacement spool piece is placed in alignment with the pipeline.

The various aspects of the present invention can be practiced alone or in combination with one or more of the other aspects, as will be appreciated by those skilled in the relevant arts. The various aspects of the invention can optionally be provided in combination with one ore more of the optional features of the other aspects of the invention. Also, optional features described in relation to one embodiment can typically be combined alone or together with other features in different embodiments of the invention.

Certain embodiments of the invention can include anti-corrosion coatings and devices, such as sacrificial anodes, corrosion resistant cladding and the like.

Various embodiments and aspects of the invention will now be described in detail with reference to the accompanying figures. Still other aspects, features, and advantages of the present invention are readily apparent from the entire description thereof, including the figures, which illustrates a number of exemplary embodiments and aspects and implementations. The invention is also capable of other and different embodiments and aspects, and its several details can be modified in various respects, all without departing from the scope of the present invention as defined by the claims. Accordingly, the drawings and descriptions are to be regarded as illustrative in nature, and not as restrictive. Furthermore, the terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes.

Any discussion of documents, acts, materials, devices, articles and the like is included in the specification solely for the purpose of providing a context for the present invention. It is not suggested or represented that any or all of these matters formed part of the prior art base or were common general knowledge in the field relevant to the present invention.

In this disclosure, whenever a composition, an element or a group of elements is preceded with the transitional phrase "comprising", it is understood that we also contemplate the same composition, element or group of elements with transitional phrases "consisting essentially of, "consisting", "selected from the group of consisting of, or "is" preceding the recitation of the composition, element or group of elements and vice versa.

All numerical values in this disclosure are understood as being modified by "about". All singular forms of elements, or any other components described herein including (without limitations) components of the apparatus to collect cuttings are understood to include plural forms thereof and vice versa.

The settable material is typically an epoxy grout that is pumpable, and that retains its fluid phase for sufficient time to permit mixing and injection (approximately 30-60 minutes) at 2-5°C and which sets to a solid phase thereafter within 24 hours. Typically, the setting time to reach solid phase is less than 6 hours. Typically, the grout comprises a resin, such as epoxy and a catalyst or hardener that induces the phase change from liquid to solid. Typically, the two are mixed together before injection to the annulus between the clamp device and the pipe.

The settable material can typically be an epoxy or cement-based grout, adapted to change phase at the normal operating ambient temperature or the pipe clamp. In some embodiments of the invention, the settable material can comprise a filler material. A typical settable material comprises a resin component, such as bisphenol epoxy resin, a hardener, and may optionally include a filler such as silica or an aliphatic polyamine. A typical grout that is useful for certain embodiments of the invention is grout DG38, DG38/07 or DG118/09 available from Weber, Flitwick, United Kingdom.

The settable material can typically be injected into the annular chamber at a high pressure, typically higher than the normal internal operating pressure of the pipeline to which the clamp device is applied.

In certain embodiments of the invention, a heating element can be included in the clamp device for heating of the grout to accelerate or initiate the setting of the grout after injection.

The separate components of the grout can typically be mixed while being pumped into the annulus, and typically in a mixing pipe that supplies the injection line to the body of the clamp device. Optionally, the mixing line can incorporate an auger, or other rotary or static mixing apparatus forcing the two components of the grout to mix within the mixing line before they reach the injection line into the annulus. Typically, each component of the grout is retained in a bladder or other container adjacent to the defect being repaired, and the piped distance between the unblended components in the containers and the injection line into the annulus is typically short, in order to avoid premature setting of the mixed components in the mixing line before reaching the annulus.

An embodiment of the present invention will now be described with reference to the accompanying drawings, in which:-
Fig. 1 is a plan view of a pipe clamp in a closed configuration (not claimed);
Fig. 2 is an end view of the Fig. 1 pipe clamp;
Fig. 3 is a plan view of the Fig. 1 pipe clamp in an open configuration;
Fig. 4 is a section view through line A-A of Fig. 1;
Fig. 5 is a plan view of a second embodiment of a pipe clamp in a closed configuration (not claimed);
Fig. 6 is an end view of the Fig. 5 pipe clamp;
Fig. 7 is a plan view of the Fig. 5 pipe clamp in an open configuration;
Fig. 8 is a section view through line A-A of Fig. 5;
Fig. 9 is a side view of the Fig. 1 pipe clamp, clamped onto a pipe and using low pressure seals to seal around a non-leaking defect;
Fig. 10 is a sectional view of the Fig. 1 pipe clamp, clamped around a pipe and using low pressure seals to seal around a non-leaking defect;
Fig. 11 shows a side view of the Fig. 1 pipe clamp, clamped around a pipe and using high pressure seals to seal a leaking through wall defect in the pipe;
Fig. 12 shows a sectional view through the Fig. 1 pipe clamp, clamped around a leaking pipe and using a high pressure seal to seal around the leaking defect;
Fig. 13 shows a side view of the Fig. 1 clamp being used to connect a replacement spool piece between the flanges of adjacent pipe clamps;
Fig. 14 shows a sectional view through the pipe clamp of Fig. 1, being used to connect a spool piece between adjacent flanges of a pair of pipe clamps, and using both high pressure and low pressure seals at respective ends of the clamps;
Fig 15 shows a side view of a further design of pipe clamp with an installation frame;
Fig 16 shows an end view of the Fig 15 arrangement;
Fig 17 shows a schematic view of a further embodiment of a pair of pipe clamp devices being used for connecting a pipe spool between two pipe ends;
Fig 18 shows a perspective view of the Fig 17 clamp devices and the spool;
Figs 19 and 20 show perspective views of the Fig 17 clamp devices in an open configuration being applied to the pipe;
Fig 21 shows a perspective view of a Fig 17 clamp device in a closed configuration after being applied to the pipe;
Fig 22 and 23 show perspective sectional views of the Fig 21 arrangement;
Fig 24 shows a side view of the Fig 18 arrangement;
Fig 25 shows a side view of a pipe clamp device from Fig 24;
Fig 26 shows an end view on the pipe clamp device from Fig 25; and
Fig 27 shows a section view through line B-B of Fig 26.

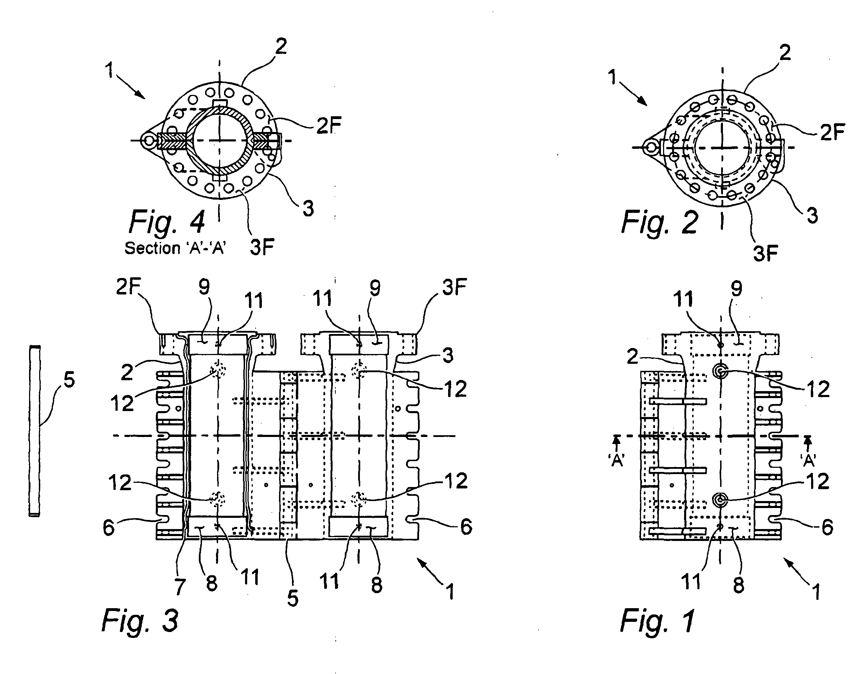

Referring now to the drawings, a pipe clamp 1 according to a first embodiment has two half shells 2, 3, each of the half shells 2, 3 having a flange 2f, 3f at one end. The flanges 2f, 3f are hemi-cylindrical, and as shown in Figs. 2, 3 and 4 engage one another at their mating faces so that the mating faces press together to complete the circumference and form a continuous flange around one end of the clamp 1. The half shells 2, 3 are hingedly connected together at one side by a hinge pin 5. At least one, but typically each of the half shells 2, 3 are adapted to pivot around the hinge pin 5 relative to the other of the half shells, to open and close the half shells in relation to one another as shown in Fig. 3. The hinge pin 5 is connected to the respective half shells 2, 3 by means of a web.

At the opposite side of the half shells 2, 3 an arrangement of slotted projections 6 extends radially from the side of each half shell 2, 3 so that the slots in the projection 6 are axially aligned with one another. The slotted projections 6 function as part of a securing device to receive the heads and nuts of bolts within the slots, so that the two half shells 2, 3 can be clamped around the pipe by applying torque to the nuts.

At least one (and optionally each) of the half shells 2 has on each mating face an sealing profile in the form of a shallow recess to receive a sealing device such as a section of O-ring cord. The sealing device typically extends along the sides of the mating faces of the two half shells 2, 3, and the recess 7 that guides the path of the seal typically encroaches onto annular recesses 8 and 9 located at opposite ends of the two half shells 2, 3. The annular recesses 8, 9 are typically adapted to receive annular seals to close off the end regions of the annulus between the pipe and the clamp 1. In the made up connector shown in Fig. 4, the annular recesses 9 interconnect with one another in the made up connector, as do the annular regions 8, thereby allowing seals that are disposed in the annular recesses 8 and 9 to interengage with one another in order to seal off the annulus between the clamp 1 and the pipe to which it is attached.

Each annular recess 8, 9 has a port 11 that extends radially through each half shell 2, 3 and connects the inner surface of the recess to the outside of the half shell 2, 3. The port 11 allows injection of fluids from the outer surface of the clamp 1 through the body thereof, and into the annular recess 8, 9. Typically, the port 11 is located in an axially central position in the recesses 8, 9.

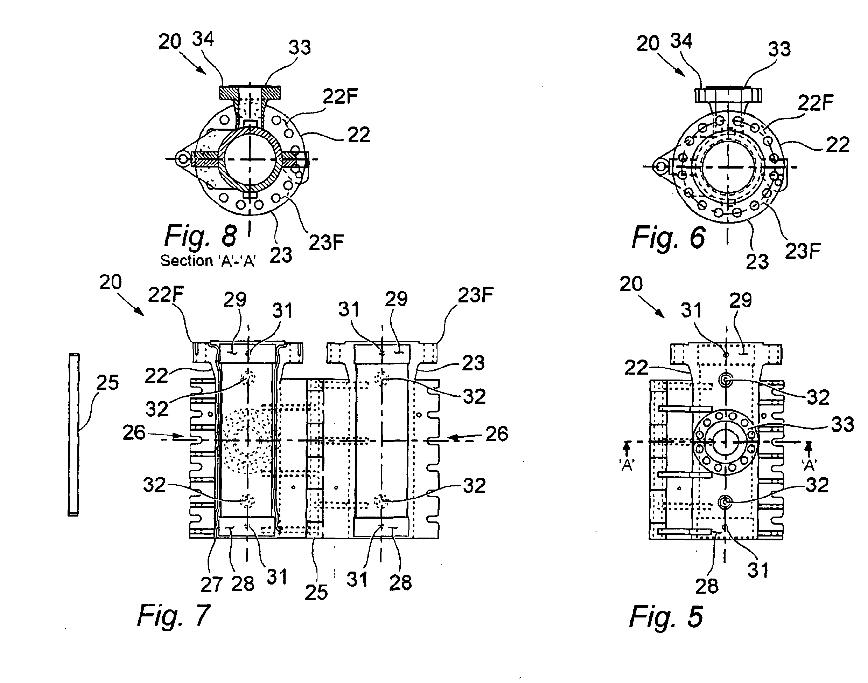

Referring now to Figs. 5-8, a second embodiment of a pipe clamp 20 has a substantially identical structure to the pipe clamp 1, and like parts are designated by the same reference numeral, increased by 20. Therefore, half shell 2 in the first embodiment 1 is substantially equivalent to half shell 22 in the second embodiment 20. In the interests of brevity, a description of the equivalent parts will not be recited here. The second embodiment 20 differs from the first embodiment 1 in that the second embodiment 20 additionally incorporates a T-piece 33 having a flange 34. The T-piece 33 extends radially out of the body of the half shell 22, for connection to a hot tapping apparatus. Conventional design of hot tapping apparatus can be used with the present embodiments of the invention. The T-piece 33 can optionally open onto the inner surface of the half shell 22, permitting fluid communication between the interior of the pipe clamp 20 and the hot tapping equipment connected to the outer surface of the flange 34. Optionally, the inner surface of the half shell 22 can incorporate a seal, for example a saddle seal, which can typically encircle the aperture leading to the T-piece 33.

It should be noted that the T-piece 33 extends perpendicular to the long axis of the clamp 20, but certain embodiments of the invention can be contemplated in which the access sleeve leading to the aperture into the interior of the connector can be set at some other angle, and K-pieces and Y-pieces instead of the T-piece 33 are contemplated within the scope of the present invention. It should also be noted that there can be more than one T-piece, K-piece or y piece on a single clamp.

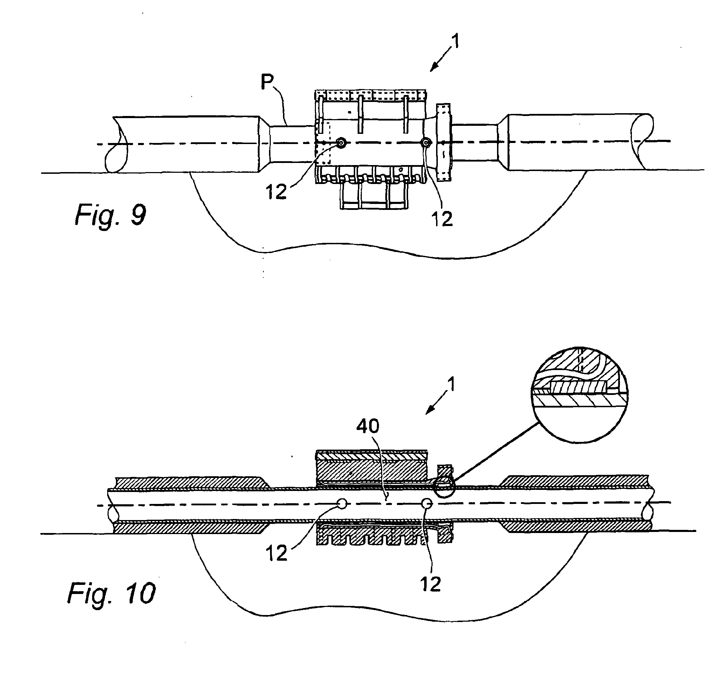

Referring now to Fig. 9, in use, the pipe clamp device 1 is opened around the hinge 5 to separate the two half shells 2, 3, which are closed around an excavated section of pipe P from which a section of pipeline coating has been removed. The pipe P typically has a defect in the cleared area, which in the present embodiment of Fig. 9 and 10 is typically a non-leaking defect such as a gouge or a patch of corrosion which has maintained pipeline integrity, and which is managing to withhold pressure within the pipeline, but which is in danger of losing integrity and leaking pipeline fluid if left untreated. After excavation of the damaged section, removal of the pipeline coating and placing of the two half shells 2, 3 of the clamp device 1 around the pipe P, the bolts are then inserted into co-operating slotted projections 6 and tightened to press the half shells 2, 3 together around the pipe P. The sealing profile 7 typically contains a sealing device such as an O-ring cord, and the annular recesses 8, 9 typically contain semi-annular resilient packer strips, which typically fill the semi-annular recesses 8 and 9, so that when the two half shells of the pipe clamp 1 are pressed together by the action of the nuts and bolts in the slotted projections 6, the resilient packers in the recesses are pressed together thereby surrounding the pipe P and completing the circumferential seal around it. Since the sealing profile 7 is partially diverted into the sealing recesses 8, 9, the O-ring cord sealing the sides of the two half shells of the clamp 1 are pressed into the annular seals in the recesses 8, 9, thereby substantially sealing off the annulus between the pipe P and the clamp 1.

The inner diameter of the made up clamp 1 is typically larger than the outer diameter of the pipe P, thereby creating an annulus between the outer surface of the pipe P and the inner surface of the made up clamp 1, which is sealed by the end and side seals in profiled recesses 7, 8, 9.

Once the annulus is sealed by the action of the bolts and the slotted projections 6, the annulus can optionally be flushed with clean water to displace any debris and salt water from the chamber, and then optionally dried by injection of dry Nitrogen gas through the injection line 12. Once the chamber is dry, grout can typically be injected through the injection line 12 into the annulus between the clamp 1 and the pipe P. The annulus is continuous, and so the liquid settable material flows around it to create a tubular layer of settable material filling the annulus and extending around the pipe P. In particular, the settable material injected through the injection lines 12 flows over the outer surface of the defect 40.

The clamp 1 is then left for the settable material to change phase from its liquid phase in which it was pumped into the annulus to a solid phase. The change in phase occurs as a result of a hardener or catalyst component and the remainder of the settable material, which is mixed with the hardener or catalyst before being injected, or during the injection process. Typically, the settable material comprises an epoxy resin and an aliphatic polyamine hardener. In the present example, the settable material used was grout DG38/07 or DG118/09 available from Weber UK. The grout DG38/07 or DG118/09 was mixed with a sufficient amount of catalyst at a local site adjacent to the pipe P. This was typically achieved by transferring a bladder of the resin and a bladder of the hardener to the seabed on a grout skid, and expelling measured amounts of each into a common mixing tube provided with an auger in order to mix the two components together as they pass through the mixing tube (not shown). The mixing tube connects to the outer end of the injection line 32 in order to inject the mixed grout into the annulus before it has started to harden.

The end seals located in the recesses 8, 9 are typically simple resilient bands that are adapted to deform in order to press the ends of the resilient bands together and encircle the pipe to seal off the annulus. The pressure rating of the end seals in the embodiment shown in Fig. 9 and Fig. 10 is typically sufficient to retain the grout within the annulus as it is injected, but in this embodiment, the grout is typically not injected under high pressure, and the resilient packer seals used in this embodiment do not need to be high performance or long term seals. Also, the seals do not need to compress with excessive radial force against the outer surface of the pipe, and it is sufficient if the grout is largely retained in the annulus and maintained there while the setting process is under way. This typically takes around 6-12 hours at normal temperatures of 2-5 degrees, although typically the clamp is left for approximately 24 hours to ensure sufficient hardening of the grout within the annulus.

Once the grout has hardened in the annulus, the defect 40 is mechanically supported by the grout, which has also been transferred into any cracks or surface irregularities in the area of the defect 40, thereby structurally supporting the pipe, and reducing the likelihood of leakage in the area of the defect. The set grout also transfers the internal pressure of the pipeline fluid radially outwards onto the body of the clamp 1, which removes hoop stress from the pipe P in the region of the defect 40, thereby also reducing the likelihood for future failures of the pipe at this site.

The clamp 1 is left in place for the life of the pipeline P.

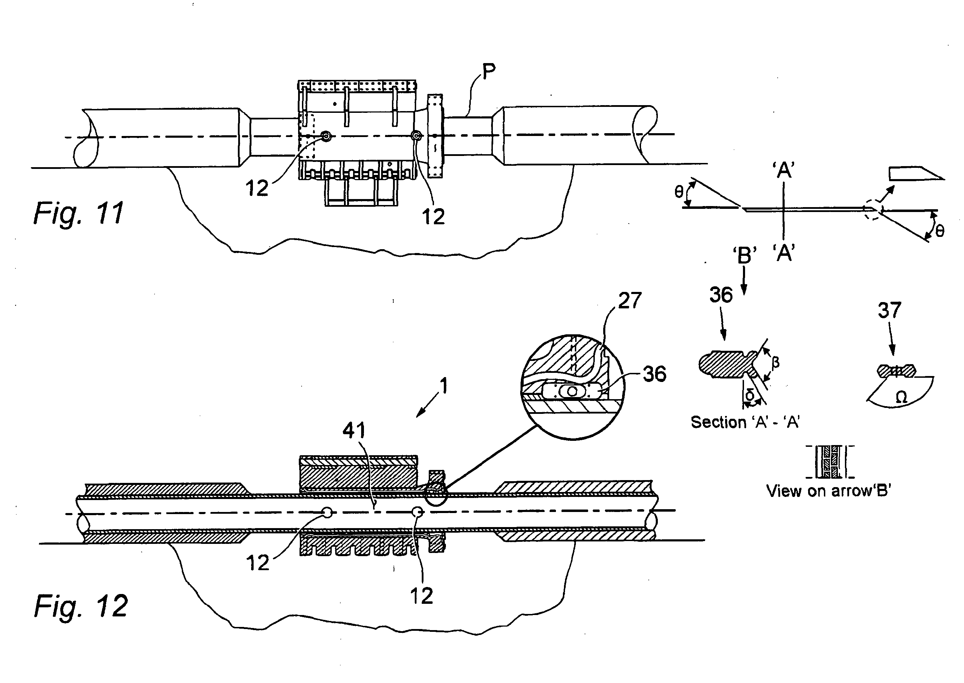

Turning now to Fig. 11 and Fig. 12, these figures show the use of first embodiment of the clamp 1 to treat a defect 41 in an area of pipe P from which a coating has been locally removed. The defect 41 is a through-wall defect resulting in a leak of pipeline fluids from within the pipeline to the outer surface thereof.

When being used with a leaking wall defect on a high pressure pipeline, the clamp 1 is fitted around and fastened to the pipe P as previously described, but instead of the low pressure seals in the form of the resilient packers occupying the recesses 8, 9, these recesses contain high pressure sealing devices in the form of first and second seal bodies 36 separated by a spacer, typically in the form of a dog-bone spacer 37 adapted to engage with the facing surfaces of the first and second seal bodies 36. The seal bodies 36 are inserted into the recesses 8, 9 in an axially spaced relationship to one another. Also, the seal bodies 36 are typically substantially identical, but are optionally installed in the recesses in mirror image relationship to one another, with the spacer 37 extending axially between them to space them apart from one another. The opposing faces of the seal bodies 36 are optionally arcuate, and typically have radially inner and outer lips and advantageously form a resilient arcuate face. Typically, the inner lip presses against the outer surface of the pipe, and the outer lip presses against the inner surface of the recess. Typically, the seal bodies 36 are deformed by the compression of the two portions 2, 3 of the clamp 1. Spacing the seal bodies 36 axially away from one another by means of the spacer 37 within the recesses 8, 9 means that an annular chamber is formed between the two seal bodies 36 in each recess 8, 9 at each end of the clamp 1.

The injection line 11 typically opens into the annular chamber between the two seal bodies in this arrangement, as it is axially disposed in a central location within each of the recesses 8, 9.

Typically the annular chamber is flushed with clean water to displace any debris and salt water from the chamber, and then optionally dried by injection of dry Nitrogen gas through the injection line 11. Once the chamber is dry, grout can typically be injected through the injection line into the chamber.

Accordingly, grout injected through the injection lines 11 into the recesses 8, 9 emerges from the outlet of the injection lines 11 into the annular chamber between the axially spaced seal bodies 36. The grout flows around and over the spacer 37, which permits radial transmission of grout throughout the whole of the chamber, and this is continued under high pressure until the annular chamber between the axially spaced seal bodies 36 in the recesses 8, 9 is completed filled with grout at high pressure. Typically, the injection pressure used to inject the grout into the recesses 8, 9 is higher than the pipeline pressure in the pipe P.

Typically, a riser port can be provided in the injection line to enable circulation of fluids that are trapped within the chamber, or elsewhere within the annulus between the clamp 1 and the pipe P, so that the injected grout can flush out any liquid, and also so that the emergence of the grout from the riser hole can serve as an indication of the grout injection procedure.

Once the grout has been injected under pressure and the annular chamber between the seal bodies 36 has been completely filled with grout, the injection port is closed and the grout is left to harden as previously described. After hardening, the solid grout acts as a mechanical support for the seal bodies 36, which are therefore better able to withstand and to contain pipeline pressure emerging through the defect 41.

Optionally, the annular area between the sealed ends can also be filled with grout as previously described for the Fig. 9 and 10 embodiment, although this step can optionally be omitted.

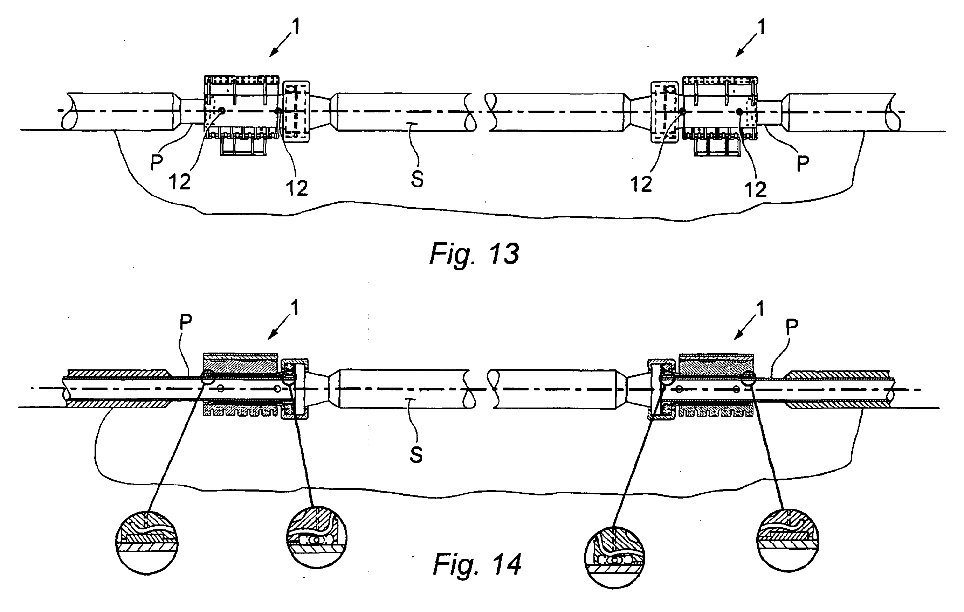

A further embodiment of the invention is shown in Figs. 13 and 14. In this embodiment, the clamp 1 is being used to treat a severe pipeline defect in the pipe P, resulting in the requirement to cut away entirely a defective section of the pipe P. The defective section of the pipe P has been cut away, and a spool piece S is being clamped in place, using a pair of clamps 1 positioned on the cut ends of the pipe in mirror image relationship to one another with the flanges facing one another for connection of the flanged ends of the spool piece S.

In the Fig. 13 and Fig. 14 embodiment, the clamp device 1 is attached to each pipe section P with the unflanged end facing the intact coated section of pipe P, and the flanged end facing the cutaway section previously containing the section of pipe that was defective. The structural components of the pipe clamp device 1 in the third embodiment shown in Figs. 13 and 14 are the same as used in previous embodiments, except for the seals. In Figs. 13 and 14 embodiment, the recess 8 at the unflanged inner end of the clamp 1 houses a low pressure seal as disclosed in relation to the first embodiment, whereas the recess 9 disposed at the outer flanged end of the clamp 1 houses a high pressure seal as described in relation to the second embodiment shown in Figs. 11 and 12.

In operation, the pipeline P is shut down and excavated as necessary, and the defective section of pipe (not shown) is the cut out and the pipeline coating cut back as previously described. A clamp 1 is then landed on the cut ends of each facing section of pipe P in opposite orientation to one another so that the flanged ends of the clamps 1 face one another and are in alignment with one another. The clamps 1 are then tightened around the cut end sections of the pipe P as previously described. The spool piece S is then positioned between the flanges of the clamps 1, flushed and dried, and grout is then injected through the injection ports 12 into the annulus between the bodies 1 and the pipe sections P and is left to dry, as described in relation to the first embodiment. After the grout has dried and the clamps 1 are in place on the cut ends of the pipe P, the high pressure seal cavities are injected with grout through the injection lines 11 as described in relation to the second embodiment in order to pressurise and support the high pressure seals in the same way as described above.

After setting of the grout injected into the high pressure seal in the recess 9, the pipeline can be flowed as normal.

In certain embodiments the clamp device can be fitted to deformed pipes, e.g. across bends or dents in the pipe that affect the alignment of the pipe. In some embodiments, the clamp device can have a generous annular area between the clamp and the pipe, and this annular clearance, and the resilient ends seals, enable certain embodiments of the device to tolerate considerable variations in pipe bend radius, diameter ovality, surface unevenness and misalignment.

In some embodiments, the clamp device can be formed as a linear cylinder, adapted to attach to pipes that are straight. However, some other embodiments of the invention allow the formation of clamps that are arcuate or that have dog legs or other deviations from linear arrangements. Accordingly a clamp can be shaped to conform with and follow any significant deviations from linear that are present in the pipe to which it is attached, and so the clamp can therefore itself incorporate deviations such as bends, dog legs, etc. Thus the clamp can fit the actual shape of the defect area when there may be a deviation/tolerance from the measured pipeline damage.

Optionally the clamp can incorporate a centralising device for adjusting the position of the clamp with respect to the pipe before the clamp is placed around the pipe. Typically in one embodiment, the centralising device can comprise a saddle device typically having a pair of U-shaped members spaced apart from one another along the axis of the pipe, and in which the U-shaped members are adapted to receive the pipe between the arms of the U.

The saddle device typically incorporates a centralising device, which is typically located between the saddle device and the pipe, to move the two relative to one another. The centralising device can be active, like a hydraulic cylinder, or can be passive, like a spring or a resilient pad or seal. A passive device can optionally be self-centering. The centralising device can typically deform between the U-shape on the saddle device and the pipe in order to centralise the pipe as necessary. Typically, the centralising device can move the pipe relative to the saddle device to adjust the position of the pipe before the clamp is applied.

Optionally the clamp is connected to the saddle device and can be fixed to it in a pre-determined orientation, so that movement of the centralising devices on the saddle device to move the saddle device relative to the pipe also moves the clamp relative to the pipe by the same amount, to centralise the clamp with respect to the pipe.

Optionally the assembly can incorporate sensors to determine the relative locations of the pipe and the clamp or the pipe and the saddle device. The sensors typically feed back information to allow (or control) operation of the centralising devices to move the saddle device (and thus the clamp) relative to the pipe.

The clamp is typically held on a frame that is rigidly connected to the clamp and to the saddle device.

The clamp can be set in a particular spatial relationship with the saddle device (e.g. a co-axial relationship, but other relationships are possible) on the deck of a vessel, where the relationship between the clamp and the saddle device can be precisely measured and adjusted using surface equipment. When set in the desired spatial relationship to one another, the saddle device and the clamp (optionally with the frame between them) can be lowered onto the pipe on the seabed, optionally with ROV assistance, where the saddle device can be centred on the pipe by means of the centralising devices on the saddle device. Once the alignment of the clamp and the pipe has been optimised, the clamp is then closed around the pipe and sealed in place as previously described.

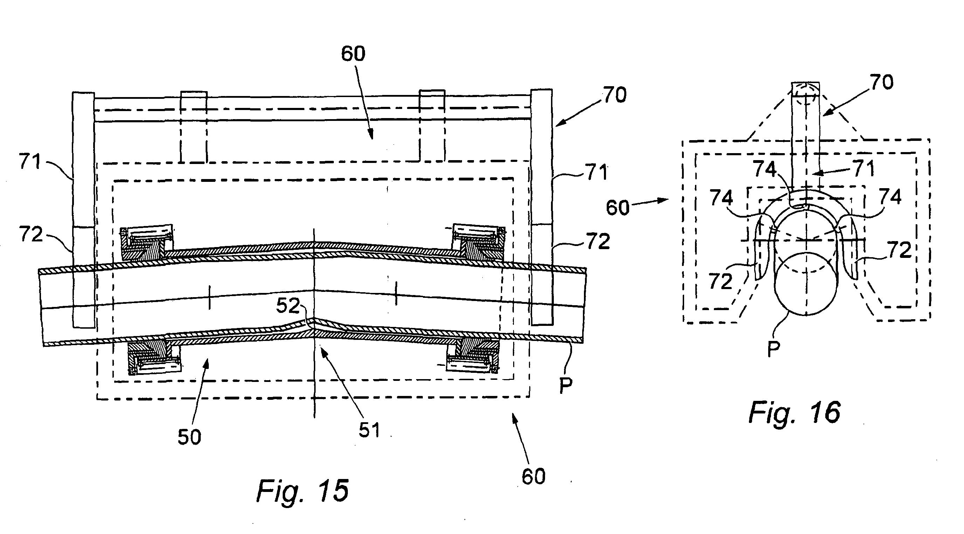

Fig 15 and 16 show a third embodiment of a clamp 50 having similar features to the previous designs disclosed herein, but which is mounted in a frame 60 that is set in a saddle device 70. The frame 60 surrounds the clamp 50 on three sides, and holds it in a defined spatial relationship with the saddle 70. In this example, the saddle is co-axial with the clamp 50, but the two could be held in some other relationship by the frame. The clamp 50, the frame 60 and the saddle device 70 are all fixed together on the surface of a deploying vessel in the desired coaxial relationship. The saddle has two U-shaped members 71 on arms providing a pair of cradles 72 in the U-shaped members. The cradles are typically held in co-axial alignment with one another and the arms and the cradles are oriented generally perpendicularly to the clamp. The cradles 72 have spaced apart arms between which the pipe is received when the assembly is lowered onto the pipe on the seabed.

Typically, the cradles 72 have centralising devices in the form of resilient pads 74, which are located on the inner surface of the cradles 72, typically spaced apart around the circumference of the U. When the assembly is lowered onto the pipe, the pads 74 typically deform between the outer surface of the pipe P and the inner surface of the cradles 72, thereby centralising the pipe P with respect to the saddle device 70.

The pads 74 can typically be replaced by hydraulic devices that expand and contract to move the pipe P with respect to the saddle device 70 when the two are in contact. The circumferential spacing of the centering devices typically resolves the relative movement in a number of different directions to centralise the pipe with respect to the saddle device 70.

Since the clamp 50 is set in a defined spatial relationship with the saddle device 70, the centralising of the saddle device 70 with respect to the pipe also centralises the pipe P with respect to the clamp 50.

The saddle device 70 can optionally be moved and controlled using hydraulic rams or other mechanical means. The saddle device 70 can be operated by divers for shallow water and ROV for deepwater.

The clamp 50 can optionally be formed with a dogleg 51 to follow the - outline of a damaged pipe.

The clamp 50 can optionally be formed with an internal shoulder 52 to support a dent in the outer surface of the pipe P.

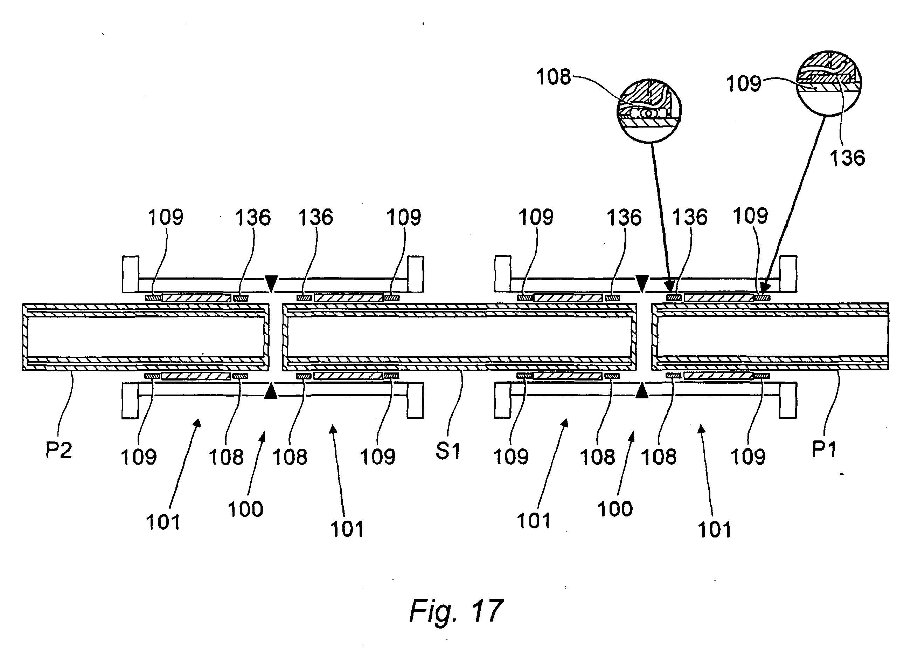

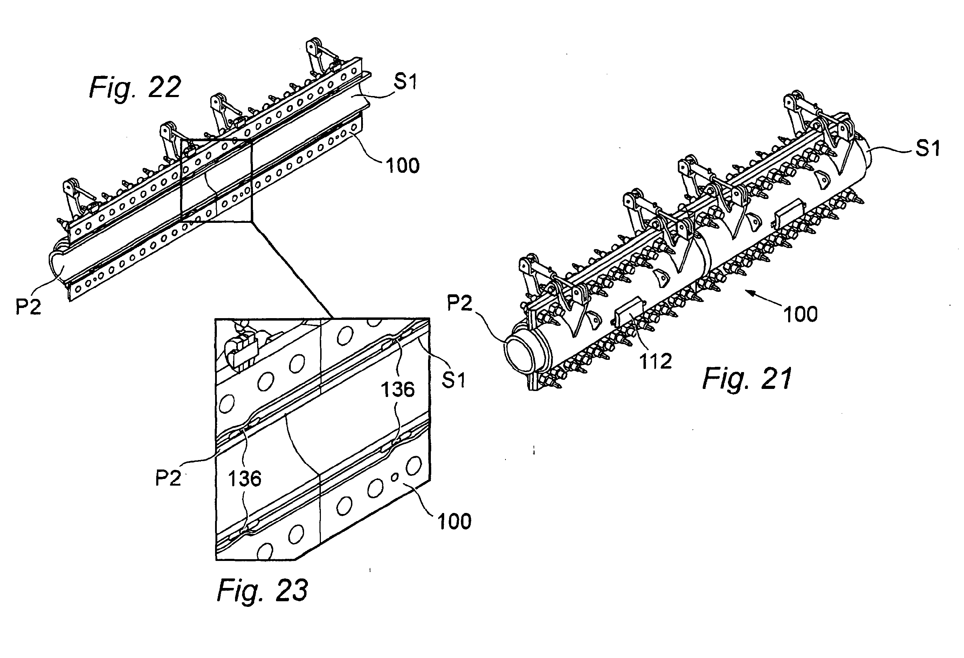

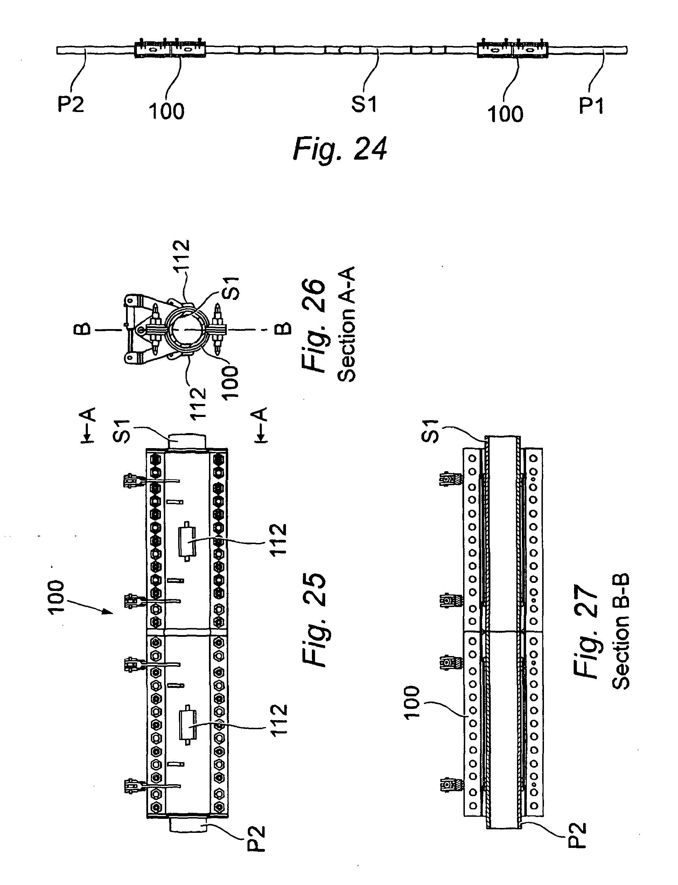

A further embodiment of the invention is shown in Figs. 17-27. In this embodiment, a fourth embodiment of a clamp device 100 is being used to connect a replacement spool piece S1 defect in between two ends of parent pipe P1 and P2. The replacement spool piece S1 is being inserted in place of a defective section of the pipe, which has been cut away using conventional techniques leaving the two free ends of pipe P1 and P2. The spool piece S1 is being clamped in place using a pair of clamps 100 positioned on the cut ends of the pipe. The clamps can have flanges or can be plain, and can have Y or K pieces if desired, and/or any of the other features such as seal devices etc as described with reference to the earlier embodiments. In the present embodiment, the clamp devices 100 have been constructed by welding two pipe clamps 101 to one another in mirror image relationship to one another. The pipe clamps 101 are very similar to the previously described pipe clamps 1. They are typically closed by hydraulic ram devices and optionally secured in a closed position by bolts that extend through apertures in axially extending flanges typically spaced diametrically around the circumference of the clamp device 100.

In the present embodiment, the clamp device 100 straddles each junction between the pipe sections and the spool piece. If flanges are present on the clamp device 100 typically the flanged end faces the intact coated section of parent pipe P1 and P2, and the un-flanged end faces the connections between the parent pipe P1, P2 and the spool piece. The structural components of the pipe clamp device 100 in the fourth embodiment shown in Figs. 1-7-27 can optionally be the same as used in previous embodiments. In the fourth embodiment 100, the recess 108 at the unflanged inner end of the clamp 100 typically houses a high pressure seal 136, whereas the recess 109 disposed at the outer flanged end of the clamp 101 typically houses a low pressure seal, although each recess could have a low or a high pressure seal if desired.

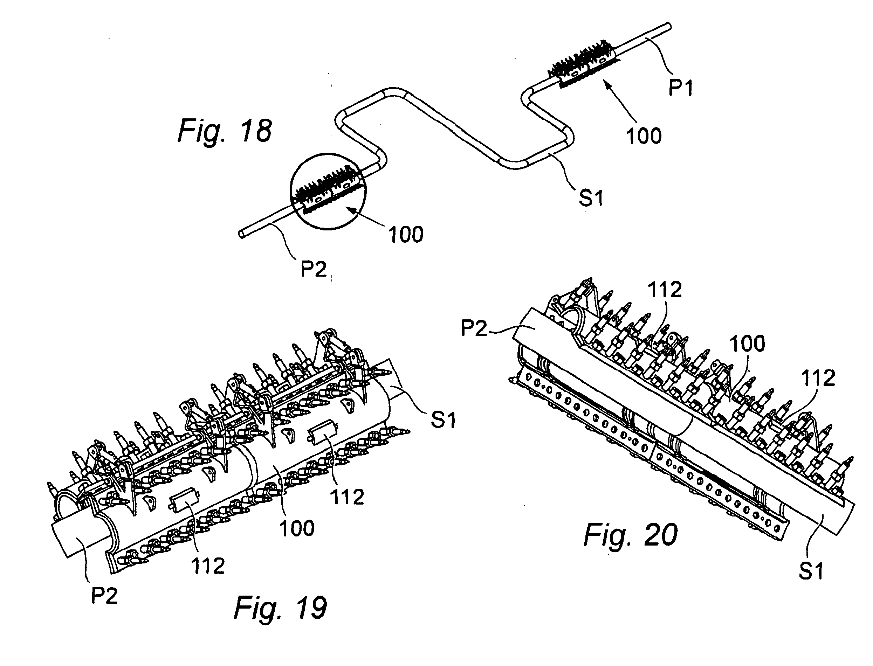

In operation, the pipeline is shut down and excavated as necessary, and the defective section of pipe (not shown) is the cut out and the pipeline coating cut back as previously described. A spool piece S1 is then constructed with appropriate loops as required for expansion and contraction and clamps 100 (typically formed from end-to-end welding at the surface of two clamps according to the first embodiment) are typically prepared for attachment between an end of the spool piece S1 and an end of the parent pipe. Typically the spool piece S1 is landed in position between the cut ends of parent pipe and aligned, typically using ROVs. The clamps are then typically deployed separately from the surface, and can be opened and applied around the connection once the spool piece S1 is aligned with the parent pipe as shown in Figs 19 and 20, before being closed around the connection to straddle it, so that the connection between the spool piece S1 and the ends of the parent pipe P1, P2 is located around the centreline of the clamp device 100, typically aligned with the weld between the clamp sections, as shown in Fig 19. When the clamp device 100 is in place straddling the connection between the spool piece S1 and the ends of the parent pipe P1, P2, the clamp devices are closed and tightened to energise the seals.

In one optional variation of this method, the clamps can be applied to the spool piece at the surface (typically in the factory or on the quayside before loading onto a supply vessel, before the assembly of the spool piece S1 and the clamps 100 are lowered together from the deployment vessel. Typically the clamps 100 can be applied to the spool piece S1 by sliding them onto opposite ends on the surface, typically on the quayside or factory, so that once the spool piece S1 is lowered into place and generally aligned with the ends of the parent pipe P1 and P2, the clamps can be slid axially along the spool piece to straddle the connection between the spool piece S1 and the parent portions of the pipe P1 and P2.

Alternatively, or additionally, the clamps 100 can be applied and optionally fixed in place at one end of the spool piece S1, which can then be expanded using expansion loops to move the clamps 100 and the spool piece S1 together relative to the stationary parent pipe to make up the connections to the parent pipe P1, P2. Once in place straddling the connections, the clamps 100 are then typically tightened around the cut end sections of the pipe P1 and P2 to energise the seals.

In the present embodiment, the clamp devices 100 typically have four seal devices 108. 109, which in this embodiment are mutually parallel. This typically creates more than two (e.g. three) separate sealed annular areas between the four seal devices. The outermost annular areas typically surround undamaged and sound areas of the parent pipe P1, P2 or the spool piece S1. The inner annular area typically straddles the connection between the spool piece S1 and the pipe. Injection ports 112 are typically provided through the walls of the clamp device 100 into respective separate annular areas.

Once the spool piece S1 is positioned and the clamps 100 are connected and sealed, the sealed annular areas are flushed and dried as previously described, and grout is-then injected through the injection ports 112 into the outer annular between the clamps 100 and the pipe sections P1 and P2 and is left to dry, as described in-relation to the first embodiment. Grout is not typically injected into the inner annular area straddling the connection. After the grout has dried and the seals have been tested, the high pressure seal cavities 108 are typically injected with grout through injection lines as described in relation to the second embodiment in order to pressurise and support the high pressure seals 136 in the same way as described above.

After setting of the grout injected into the high pressure seal in the recess 108, the pipeline can be flowed as normal. The pipeline pressure is contained by the high pressure seals 136 facing the pipe connection, and axial, tensile and other loadings applied to the pipe are borne by the grouted clamp device 100. The high pressure seals 136 contain the pressure in the pipeline, which may leak through the connection, but remains in the un-grouted annular area between the inner seals 136. The seals 136 can optionally be specified to resist high temperatures or corrosive fluids, depending on the content of the pipeline.

In certain embodiments the clamp device can be fitted to irregular (e.g. oval) or deformed pipes, e.g. across bends or dents in the pipe that affect the alignment of the pipe. In some embodiments, the clamp device can have a generous annular area between the clamp and the pipe, and this annular clearance, and the resilient ends seals, enable certain embodiments of the device to tolerate considerable variations in pipe bend radius, diameter ovality, surface unevenness and misalignment.

The clamp 100 can optionally incorporate other features of the previous embodiments as desired.

## Claims

1. A pipe clamp device comprising first and second portions (2, 3) connected together at a hinge (5), at least one portion being adapted to move pivotally around the hinge (5) relative to the other portion, the first and second portions (2, 3) being adapted to co-operate with one another to close around and at least partially encircle a pipe to be clamped, the pipe clamp device (1) having securing members (6) to secure the first and second portions (2, 3) in a clamped arrangement around the pipe; the pipe clamp device (1) having a sealing mechanism configured to seal between the first and second portions (2, 3) and the pipe, wherein the sealing mechanism comprises first and second seal devices housed in respective recesses (8, 9) and defining a sealed chamber between the recessed first and second seal devices, and wherein the pipe clamp device (1) is adapted for a settable fluid to be injected between the first and second seal devices and the pipe;
**characterised in that** at least one of the first and second seal devices has first and second seal bodies (36) spaced axially away from one another to define a low volume chamber therebetween.

2. A pipe clamp device as claimed in claim 1, wherein both the first and second seal devices have first and second seal bodies (36) spaced axially away from one another to define a low volume chamber therebetween.

3. A pipe clamp device according to claim 1 or claim 2 wherein the first and second seal devices are removable from their respective recesses (8, 9), and wherein the pipe clamp device (1) further comprises alternate first and second seal devices insertable in the recesses in place of the original seal devices.

4. A pipe clamp device according to claim 3 wherein the alternate and the original seal devices are adapted to seal at different pressures.

5. A pipe clamp device according to any preceding claim wherein the first and second seal devices are located at opposite ends of the first and second portions (2, 3) defining the sealed chamber.

6. A pipe clamp device according to any preceding claim wherein the first and second seal bodies comprise a first and second seal body part on each of the first and second portions (2, 3) of the pipe clamp device, and wherein the first and second portions (2, 3) of the pipe clamp device are axially aligned with one another at each end of the pipe clamp device, so that when the pipe clamp device (1) is clamped in place over a pipe, each seal body is adapted such that the first and second seal body parts on the first portion engage and act in concert with the first and second seal body parts on the second portion in order to provide a continuous seal of an annulus between the pipe clamp device and the pipe, with a continuous low volume chamber across the first and second portions (2, 3) for the or each seal device.

7. A pipe clamp device according to any preceding claim, wherein the sealed chamber, or the low volume chamber between the first and second seal bodies, or both, have one or more injection points (11, 12), wherein each of the injection points (11, 12) is connectable to an injection line for injection of settable fluid.

8. A pipe clamp device according to any preceding claim wherein opposing faces of the first and second seal bodies of a seal device each have an arcuate surface with radially inner and outer lips.

9. A pipe clamp device according to any preceding claim wherein the first and second seal bodies are housed within an annular recess (8, 9) defined by inner faces of the first and second portions (2, 3).

10. A pipe clamp device according to any preceding claim wherein the first and second seal bodies in the or each seal device are spaced apart from one another by a spacer (37).

11. A pipe clamp device according to any preceding claim wherein the first and second seal bodies have a waffle profile.

12. A pipe clamp device according to any preceding claim further comprising a heating element.

13. A method of repairing a pipe defect, the method comprising:
applying a pipe clamp device (1) to the defect, wherein the pipe clamp device (1) comprises first and second portions (2, 3) connected together at a hinge (5);
closing the first and second portions (2, 3) around the defect to at least partially encircle the defect;
securing the first and second portions (2, 3) around the pipe to define a chamber between the first and second portions (2, 3) and the pipe;
sealing the chamber using first and second seal devices; and
injecting a settable fluid between the first and second seal devices and the pipe;
**characterised in that** in sealing the chamber, at least one of the first and second seal devices has first and second seal bodies spaced axially away from one another to define a low volume chamber therebetween.

14. A method of repairing a pipe defect according to claim 13 wherein both of the first and second seal devices have first and second seal bodies spaced axially away from one another to define a low volume chamber therebetween, and wherein the first and second seal bodies and the low volume chamber on each of the first and second portions (2, 3) of the pipe clamp device are axially aligned with one another at each end of the pipe clamp device (1), so that when the pipe clamp device (1) is clamped in place over a pipe, the first and second seal bodies on the first portion engage and act in concert with the first and second seal bodies on the second portion in order to provide a continuous first and second seal of an annular area between the clamp device and the pipe, with a continuous low volume chamber therebetween.

15. A method of repairing a pipe defect according to claim 13 or claim 14 wherein the first and second seal bodies extend radially beyond a nominal diameter of an inner face of the first and second portions (2, 3), so that they stand proud of a surface of the inner face and are compressed between the pipe clamp device (1) and the pipe when the pipe clamp device (1) is clamped around the pipe.

16. A pipe clamp device according to any of claims 13 to 15 wherein the step of sealing a chamber is provided by the injected settable fluid, which flows around the respective chamber and seals it to contain the pressure, in addition to mechanical deformation of the sealing devices.

17. A method of repairing a pipe defect according to any of claims 13 to 16 wherein both of the first and second seal devices have first and second seal bodies spaced axially away from one another to define a low volume chamber therebetween, and wherein settable fluid is injected into the low volume chambers but not into the sealed chamber to create a volume of settable fluid separated by a volume containing no settable fluid.

18. A method of repairing a pipe defect according to any of claims 13 to 17 wherein the settable fluid is an epoxy grout and is pumped into a respective chamber.

19. A method of repairing a pipe defect according to claim 18 wherein the epoxy grout comprises a resin and further includes a catalyst that induces the phase change from liquid to solid, and wherein the epoxy resin and catalyst are mixed together before injection.

20. A method of connecting two ends of pipe, the method comprising:
applying a pipe clamp device (1) according to any of claims 1 to 12 around a pipe connection, wherein the pipe clamp device (1) comprises first and second portions (2, 3) connected together at a hinge (5);
closing the first and second portions (2, 3) around the connection to at least partially encircle the connection;
**characterised by**
securing the first and second portions (2, 3) around the pipe to define first and second annular areas between the first and second portions (2, 3) and the pipe; sealing the annular areas between the first and second portions (2, 3) and the pipe; and
injecting a settable fluid into the annular areas.

## Patentansprüche

1. Rohrklemmvorrichtung, umfassend einen ersten und einen zweiten Abschnitt (2, 3), die an einem Scharnier (5) miteinander verbunden sind, wobei mindestens ein Abschnitt dazu angepasst ist, sich schwenkend relativ zu dem anderen Abschnitt um das Scharnier (5) zu bewegen, wobei der erste und der zweite Abschnitt (2, 3) dazu angepasst sind, miteinander zusammenzuwirken, um um ein zu klemmendes Rohr zu schließen und es mindestens teilweise zu umschließen, wobei die Rohrklemmvorrichtung (1) Fixierelemente (6) aufweist, um den ersten und den zweiten Abschnitt (2, 3) in einer geklemmten Anordnung um das Rohr zu fixieren, wobei die Rohrklemmvorrichtung (1) einen Dichtungsmechanismus aufweist, der dazu ausgebildet ist, zwischen dem ersten und dem zweiten Abschnitt (2, 3) und dem Rohr zu dichten, wobei der Dichtungsmechanismus eine erste und eine zweite Dichtungsvorrichtung umfasst, die in jeweiligen Vertiefungen (8, 9) aufgenommen sind und eine abgedichtete Kammer zwischen der vertieften ersten und der vertieften zweiten Dichtungsvorrichtung definieren, und wobei die Rohrklemmvorrichtung (1) dazu angepasst ist, dass ein aushärtbares Fluid zwischen der ersten und der zweiten Dichtungsvorrichtung und dem Rohr eingepresst wird;
**dadurch gekennzeichnet, dass** die erste und/oder die zweite Dichtungsvorrichtung einen ersten und einen zweiten Dichtungskörper (36) aufweisen, die axial voneinander entfernt beabstandet sind, um eine kleinvolumige Kammer dazwischen zu definieren.

2. Rohrklemmvorrichtung nach Anspruch 1, wobei die erste und die zweite Dichtungsvorrichtung einen ersten und einen zweiten Dichtungskörper (36) aufweisen, die axial voneinander entfernt beabstandet sind, um eine kleinvolumige Kammer dazwischen zu definieren.

3. Rohrklemmvorrichtung nach Anspruch 1 oder Anspruch 2, wobei die erste und die zweite Dichtungsvorrichtung aus ihren jeweiligen Vertiefungen (8, 9) entnehmbar sind und wobei die Rohrklemmvorrichtung (1) weiter eine alternative erste und eine alternative zweite Dichtungsvorrichtung umfasst, die anstelle der ursprünglichen Dichtungsvorrichtungen in die Vertiefungen eingesetzt werden können.

4. Rohrklemmvorrichtung nach Anspruch 3, wobei die alternativen und die ursprünglichen Dichtungsvorrichtungen dazu angepasst sind, bei unterschiedlichen Drücken zu dichten.

5. Rohrklemmvorrichtung nach einem der vorangehenden Ansprüche, wobei sich die erste und die zweite Dichtungsvorrichtung an gegenüberliegenden Enden des ersten und des zweiten Abschnitts (2, 3), die die abgedichtete Kammer definieren, befinden.

6. Rohrklemmvorrichtung nach einem der vorangehenden Ansprüche, wobei die ersten und die zweiten Dichtungskörper einen ersten und einen zweiten Dichtungskörperteil an jedem des ersten und des zweiten Abschnitts (2, 3) der Rohrklemmvorrichtung umfassen, und wobei der erste und der zweite Abschnitt (2, 3) der Rohrklemmvorrichtung (2, 3) an jedem Ende der Rohrklemmvorrichtung axial aufeinander ausgerichtet sind, so dass wenn die Rohrklemmvorrichtung (1) über ein Rohr in Position geklemmt wird, jeder Dichtungskörper derart angepasst ist, dass die ersten und die zweiten Dichtungskörperteile an dem ersten Abschnitt mit den ersten und den zweiten Dichtungskörperteilen an dem zweiten Abschnitt in Eingriff treten und gemeinsam wirken, um eine kontinuierliche Dichtung aus einem Ring zwischen der Rohrklemmvorrichtung und dem Rohr mit einer kontinuierlichen kleinvolumigen Kammer über dem ersten und dem zweiten Abschnitt (2, 3) für die bzw. jede Dichtungsvorrichtung vorzusehen.

7. Rohrklemmvorrichtung nach einem der vorangehenden Ansprüche, wobei die abgedichtete Kammer oder die kleinvolumige Kammer zwischen dem ersten und dem zweiten Dichtungskörper oder beide einen oder mehrere Einpressstellen (11, 12) aufweisen, wobei jede der Einpressstellen (11, 12) mit einer Einpressleitung zum Einpressen von aushärtbarem Fluid verbunden werden kann.

8. Rohrklemmvorrichtung nach einem der vorangehenden Ansprüche, wobei einander gegenüberliegende Oberflächen des ersten und des zweiten Dichtungskörpers einer Dichtungsvorrichtung jeweils eine bogenförmige Fläche mit radial inneren und äußeren Lippen aufweisen.

9. Rohrklemmvorrichtung nach einem der vorangehenden Ansprüche, wobei der erste und der zweiten Dichtungskörper in einer ringförmigen Vertiefung (8, 9) aufgenommen sind, die von den inneren Oberflächen des ersten und des zweiten Abschnitts (2, 3) definiert wird.

10. Rohrklemmvorrichtung nach einem der vorangehenden Ansprüche, wobei der erste und der zweite Dichtungskörper in der bzw. jeder Dichtungsvorrichtung durch ein Distanzstück (37) voneinander beabstandet sind.

11. Rohrklemmvorrichtung nach einem der vorangehenden Ansprüche, wobei der erste und der zweite Dichtungskörper ein Waffelprofil aufweisen.

12. Rohrklemmvorrichtung nach einem der vorangehenden Ansprüche, weiter umfassend ein Heizelement.

13. Verfahren zum Reparieren eines Rohrdefekts, wobei das Verfahren Folgendes umfasst:
Aufbringen einer Rohrklemmvorrichtung (1) auf den Defekt, wobei die Rohrklemmvorrichtung (1) einen ersten und einen zweiten Abschnitt (2, 3) umfasst, die an einem Scharnier (5) miteinander verbunden sind;
Schließen des ersten und des zweiten Abschnitts (2, 3) um den Defekt, um den Defekt mindestens teilweise zu umschließen;
Fixieren des ersten und des zweiten Abschnitts (2, 3) um das Rohr, um eine Kammer zwischen dem ersten und dem zweiten Abschnitt (2, 3) und dem Rohr zu definieren;
Abdichten der Kammer unter Verwendung einer ersten und einer zweiten Dichtungsvorrichtung; und
Einpressen eines aushärtbaren Fluids zwischen der ersten und der zweiten Dichtungsvorrichtung und dem Rohr;
**dadurch gekennzeichnet, dass** beim Abdichten der Kammer die erste und/oder die zweite Dichtungsvorrichtung einen ersten und einen zweiten Dichtungskörper aufweist, die axial voneinander entfernt beabstandet sind, um eine kleinvolumige Kammer dazwischen zu definieren.

14. Verfahren zum Reparieren eines Rohrdefekts nach Anspruch 13, wobei die erste und die zweite Dichtungsvorrichtung einen ersten und einen zweiten Dichtungskörper aufweisen, die axial voneinander entfernt beabstandet sind, um eine kleinvolumige Kammer dazwischen zu definieren, und wobei der erste und der zweite Dichtungskörper und die kleinvolumige Kammer an dem ersten und dem zweiten Abschnitt (2, 3) der Rohrklemmvorrichtung an jedem Ende der Rohrklemmvorrichtung (1) axial aufeinander ausgerichtet sind, so dass wenn die Rohrklemmvorrichtung (1) über einem Rohr in Position geklemmt wird, die ersten und die zweiten Dichtungskörper an dem ersten Abschnitt mit den ersten und den zweiten Dichtungskörpern an dem zweiten Abschnitt in Eingriff treten und gemeinsam wirken, um eine kontinuierliche erste und eine kontinuierliche zweite Dichtung aus einem ringförmigen Bereich zwischen der Klemmvorrichtung und dem Rohr, mit einer kontinuierlichen kleinvolumigen Kammer dazwischen, vorzusehen.

15. Verfahren zum Reparieren eines Rohrdefekts nach Anspruch 13 oder Anspruch 14, wobei sich die ersten und die zweiten Dichtungskörper radial über einen Nenndurchmesser einer inneren Oberfläche des ersten und des zweiten Abschnitts (2, 3) hinaus erstrecken, so dass über eine Fläche der inneren Oberfläche hinausragen und zwischen der Rohrklemmvorrichtung (1) und dem Rohr zusammengedrückt werden, wenn die Rohrklemmvorrichtung (1) um das Rohr geklemmt wird.

16. Rohrklemmvorrichtung nach einem der Ansprüche 13 bis 15, wobei der Schritt des Abdichtens einer Kammer von dem eingepressten aushärtbaren Fluid vorgesehen wird, das um die jeweilige Kammer strömt und sie zusätzlich zur mechanischen Verformung der Dichtungsvorrichtungen abdichtet, um den Druck aufzunehmen.

17. Verfahren zum Reparieren eines Rohrdefekts nach einem der Ansprüche 13 bis 16, wobei die erste und die zweite Dichtungsvorrichtung einen ersten und einen zweiten Dichtungskörper aufweisen, die axial voneinander entfernt beabstandet sind, um eine kleinvolumige Kammer dazwischen zu definieren und wobei aushärtbares Fluid in die kleinvolumigen Kammern aber nicht in die abgedichtete Kammer dazwischen eingepresst wird, um ein Volumen aus aushärtbarem Fluid zu erzeugen, das von einem kein aushärtbares Fluid enthaltenden Volumen getrennt ist.

18. Verfahren zum Reparieren eines Rohrdefekts nach einem der Ansprüche 13 bis 17, wobei es sich bei dem aushärtbaren Fluid um ein Epoxid-Vergussmaterial handelt und es in eine jeweilige Kammer gepumpt wird.

19. Verfahren zum Reparieren eines Rohrdefekts nach Anspruch 18, wobei das Epoxid-Vergussmaterial ein Harz umfasst und weiter einen Katalysator umfasst, der den Phasenwechsel von flüssig zu fest einleitet und wobei das Epoxidharz und der Katalysator vor dem Einpressen miteinander vermischt werden.

20. Verfahren zum Verbinden von zwei Rohrenden, wobei das Verfahren Folgendes umfasst:
Aufbringen einer Rohrklemmvorrichtung (1) nach einem der Ansprüche 1 bis 12 um eine Rohrverbindungsstelle, wobei die Rohrklemmvorrichtung (1) einen ersten und einen zweiten Abschnitt (2, 3) umfasst, die an einem Scharnier (5) miteinander verbunden sind;
Schließen des ersten und des zweiten Abschnitts (2, 3) um die Verbindungsstelle, um die Verbindungsstelle mindestens teilweise zu umschließen;
**gekennzeichnet durch**
Fixieren des ersten und des zweiten Abschnitts (2, 3) um das Rohr, um einen ersten und einen zweiten ringförmigen Bereich zwischen dem ersten und dem zweiten Abschnitt (2, 3) und dem Rohr zu definieren; Abdichten der ringförmigen Bereiche zwischen dem ersten und dem zweiten Abschnitt (2, 3) und dem Rohr; und
Einpressen eines aushärtbaren Fluids in die ringförmigen Bereiche.

## Revendications

1. Dispositif de serrage de tuyau comprenant des première et seconde parties (2, 3) raccordées ensemble au niveau d'une articulation (5), au moins une partie étant adaptée pour se déplacer par pivotement autour de l'articulation (5) par rapport à l'autre partie, les première et seconde parties (2, 3) étant adaptées pour coopérer l'une avec l'autre pour se fermer autour d'un tuyau à serrer et encercler celui-ci au moins partiellement, le dispositif de serrage de tuyau (1) comportant des éléments de fixation (6) pour fixer les première et seconde parties (2, 3) dans un agencement serré autour du tuyau ; le dispositif de serrage de tuyau (1) ayant un mécanisme de scellage configuré pour assurer un scellage entre les première et seconde parties (2, 3) et le tuyau, dans lequel le mécanisme de scellage comprend des premier et second dispositifs de joints reposant dans des renfoncements respectifs (8, 9) et définissant une chambre scellée entre les premier et second dispositifs de joints renfoncés, et dans lequel le dispositif de serrage de tuyau (1) est adapté en vue de l'injection d'un fluide durcissable entre les premier et second dispositifs de joints et le tuyau ;
**caractérisé en ce qu'**au moins l'un des premier et second dispositifs de joints comporte des premier et second corps de joint (36) espacés axialement l'un de l'autre pour définir entre eux une chambre de faible volume.

2. Dispositif de serrage de tuyau selon la revendication 1, dans lequel les deux premier et second dispositifs de joints ont des premier et second corps de joint (36) espacés axialement l'un de l'autre pour définir entre eux une chambre de faible volume.

3. Dispositif de serrage de tuyau selon la revendication 1 ou la revendication 2, dans lequel les premier et second dispositifs de joints peuvent être retirés de leurs renfoncements respectifs (8, 9) et dans lequel le dispositif de serrage de tuyau (1) comprend en outre des premier et second dispositifs de joints de remplacement insérables dans les renfoncements à la place des dispositifs de joints d'origine.

4. Dispositif de serrage de tuyau selon la revendication 3, dans lequel les dispositifs de joints de remplacement et d'origine sont adaptés pour sceller à des pressions différentes.

5. Dispositif de serrage de tuyau selon l'une quelconque des revendications précédentes, dans lequel les premier et second dispositifs de joints sont situés à des extrémités opposées des première et seconde parties (2, 3) définissant la chambre scellée.

6. Dispositif de serrage de tuyau selon l'une quelconque des revendications précédentes, dans lequel les premier et second corps de joint comprennent une première et une seconde partie de corps de joint sur chacune des première et seconde parties (2, 3) du dispositif de serrage de tuyau, et dans lequel les première et seconde parties (2, 3) du dispositif de serrage de tuyau sont alignées axialement l'une avec l'autre à chaque extrémité du dispositif de serrage de tuyau, de telle sorte que lorsque le dispositif de serrage de tuyau (1) est serré en position par-dessus un tuyau, chaque corps de joint soit adapté de telle sorte que les première et seconde parties de corps de joint sur la première partie se mettent en prise et agissent de concert avec les première et seconde parties de corps de joint sur la seconde partie afin d'assurer un joint continu d'un anneau entre le dispositif de serrage de tuyau et le tuyau, avec une chambre continue de faible volume en travers des première et seconde parties (2, 3) pour le ou chaque dispositif de joint.

7. Dispositif de serrage de tuyau selon l'une quelconque des revendications précédentes, dans lequel la chambre scellée, ou la chambre de faible volume entre les premier et second corps de joint, ou les deux, ont un ou plusieurs points d'injection (11, 12), chacun des points d'injection (11, 12) pouvant être connecté à une ligne d'injection pour l'injection d'un fluide durcissable.

8. Dispositif de serrage de tuyau selon l'une quelconque des revendications précédentes, dans lequel des faces opposées des premier et second corps de joint d'un dispositif de joint ont chacune une surface arquée présentant des lèvres radialement interne et externe.

9. Dispositif de serrage de tuyau selon l'une quelconque des revendications précédentes, dans lequel les premier et second corps de joint reposent dans un renfoncement annulaire (8, 9) défini par des faces internes des première et seconde parties (2, 3).

10. Dispositif de serrage de tuyau selon l'une quelconque des revendications précédentes, dans lequel les premier et second corps de joint dans le ou chaque dispositif de joint sont espacés l'un de l'autre par une entretoise (37).

11. Dispositif de serrage de tuyau selon l'une quelconque des revendications précédentes, dans lequel les premier et second corps de joint ont un profil gaufré.

12. Dispositif de serrage de tuyau selon l'une quelconque des revendications précédentes, comprenant en outre un élément chauffant.

13. Procédé de réparation d'un défaut de tuyau, le procédé comprenant :
l'application d'un dispositif de serrage de tuyau (1) sur le défaut, le dispositif de serrage de tuyau (1) comprenant des première et seconde parties (2, 3) connectées ensemble au niveau d'une articulation (5) ;
la fermeture des première et seconde parties (2, 3) autour du défaut pour au moins encercler partiellement le défaut ;
la fixation des première et seconde parties (2, 3) autour du tuyau pour définir une chambre entre les première et seconde parties (2, 3) et le tuyau ;
le scellage de la chambre en utilisant des premier et second dispositifs de joints ; et
l'injection d'un fluide durcissable entre les premier et second dispositifs de joints et le tuyau ;
**caractérisé en ce qu'**au scellage de la chambre, au moins l'un des premier et second dispositifs de joints comporte des premier et second corps de joint espacés axialement l'un de l'autre pour définir entre eux une chambre de faible volume.

14. Procédé de réparation d'un défaut de tuyau selon la revendication 13, dans lequel les deux premier et second dispositifs de joints ont des premier et second corps de joint espacés axialement l'un de l'autre pour définir entre eux une chambre de faible volume, et dans lequel les premier et second corps de joint et la chambre de faible volume sur chacune des première et seconde parties (2, 3) du dispositif de serrage de tuyau sont alignés axialement l'un avec l'autre à chaque extrémité du dispositif de serrage de tuyau (1), de telle sorte que lorsque le dispositif de serrage de tuyau (1) est serré en position par-dessus un tuyau, les premier et second corps de joint sur la première partie se mettent en prise et agissent de concert avec les premier et second corps de joint sur la seconde partie afin d'assurer un premier et un second joint continu d'une zone annulaire entre le dispositif de serrage et le tuyau, avec une chambre continue de faible volume entre eux.

15. Procédé de réparation d'un défaut de tuyau selon la revendication 13 ou la revendication 14, dans lequel les premier et second corps de joint s'étendent radialement au-delà d'un diamètre nominal d'une face interne des première et seconde parties (2, 3), de façon à ce qu'ils dépassent d'une surface de la face interne et soient compressés entre le dispositif de serrage de tuyau (1) et le tuyau quand le dispositif de serrage de tuyau (1) est serré autour du tuyau.

16. Dispositif de serrage de tuyau selon l'une quelconque des revendications 13 à 15, dans lequel l'étape de scellage d'une chambre est assurée par le fluide durcissable injecté, lequel s'écoule autour de la chambre respective et la scelle pour confiner la pression, en plus d'une déformation mécanique des dispositifs de joints.

17. Procédé de réparation d'un défaut de tuyau selon l'une quelconque des revendications 13 à 16, dans lequel les deux premier et second dispositifs de joints ont des premier et second corps de joint espacés axialement l'un de l'autre pour définir une chambre de faible volume entre eux, et dans lequel un fluide durcissable est injecté dans les chambres de faible volume mais pas dans la chambre scellée pour créer un volume de fluide durcissable séparé par un volume ne contenant pas de fluide durcissable.

18. Procédé de réparation d'un défaut de tuyau selon l'une quelconque des revendications 13 à 17, dans lequel le fluide durcissable est un ciment à l'époxyde et est pompé dans une chambre respective.

19. Procédé de réparation d'un défaut de tuyau selon la revendication 18, dans lequel le ciment à l'époxyde comprend une résine et comporte en outre un catalyseur qui induit le changement de phase de liquide à solide, et dans lequel la résine époxy et le catalyseur sont mélangés ensemble avant l'injection.

20. Procédé de raccordement de deux extrémités de tuyau, le procédé comprenant :
l'application d'un dispositif de serrage de tuyau (1) selon l'une quelconque des revendications 1 à 12, autour d'un raccord de tuyau, le dispositif de serrage de tuyau (1) comprenant des première et seconde parties (2, 3) raccordées ensemble au niveau d'une articulation (5) ;
la fermeture des première et seconde parties (2, 3) autour du raccord pour au moins encercler partiellement le raccord ;
**caractérisé par**
la fixation des première et seconde parties (2, 3) autour du tuyau pour définir des première et seconde zones annulaires entre les première et seconde parties (2, 3) et le tuyau ;
le scellage les zones annulaires entre les première et seconde parties (2, 3) et le tuyau ; et
l'injection d'un fluide durcissable dans les zones annulaires.
